# NEUE EUROPÄISCHE PATENTSCHRIFT

(11) **EP 2 331 337 B2**
(45) Veröffentlichungstag und Bekanntmachung des Hinweises auf die Entscheidung über den Einspruch: **11.11.2020**
(45) Hinweis auf die Patenterteilung: 09.05.2012
(21) Anmeldenummer: 10752316.9
(22) Anmeldetag: 07.09.2010
(51) Int. Cl.: B41J 3/407, B65C 9/06, B65B 61/02, B65G 29/00

(54) **VORRICHTUNG ZUM BEHANDELN VON PACKMITTELN**
DEVICE FOR TREATING PACKAGING MEANS
DISPOSITIF DE TRAITEMENT DE MATERIAUX D'EMBALLAGE

(30) Priorität: 30.09.2009 DE 102009043497
(43) Veröffentlichungstag der Anmeldung: 15.06.2011
(73) Patentinhaber: KHS GmbH, 44143 Dortmund (DE)
(72) Erfinder: PRECKEL, Katrin, 45892 Gelsenkirchen (DE); PSCHICHHOLZ, Manfred, 59174 Kamen (DE); PUTZER, Frank, 22399 Hamburg (DE); REINIGER, Markus, 41238 Mönchengladbach (DE); SCHACH, Martin, 44799 Bochum (DE); SCHLÜTER, Winfried, 48612 Horstmar (DE); VAN DE WYNCKEL, Werner, 1861 Wolvertem (BE)
(86) Internationale Anmeldenummer: PCT/EP2010/005478
(87) Internationale Veröffentlichungsnummer: WO 2011/038827

(56) Entgegenhaltungen:
- DE-A1- 19 654 658
- DE-A1-102007 050 490

## Beschreibung

Die Erfindung bezieht sich auf eine Vorrichtung zum Behandeln von Packmitteln, wie Flaschen, Dosen oder dergleichen Behältern in einem mehrere Arbeitsschritte aufweisenden Prozess gemäß Patentanspruch 1 und dabei speziell auch auf eine Vorrichtung zum Bedrucken von Packmitteln.

Gegenstand einer älteren, nicht vorveröffentlichten Patentanmeldung DE **...** ist eine Vorrichtung zum Aufbringen eines Mehrfarbdrucks auf Packmittel, bei der (Vorrichtung) die Packmittel zum Bedrucken auf einer vorrichtungsinternen Transportstrecke an mehreren Druckstationen oder Druckwerken oder Druckköpfe vorbei bewegt, an denen jeweils ein Farbsatz des Mehrfarbendrucks aufgebracht wird. Die vorrichtungsinteme Transportstrecke ist von mehreren in Transportrichtung aneinander anschließenden rotor- oder transportsternartigen und jeweils um eine vertikale Achse umlaufend antreibbaren Transportelementen gebildet, auf denen die Druckköpfe vorgesehen sind. Das Bedrucken erfolgt durch Rotieren der Packmittel um ihre Achse aus einer vorgegebenen Ausgangslage. Die Packmittel sind hierbei auf den Transportelementen an Halte- und Zentriereinheiten gehalten und mit diesen Einheiten derart ausgerichtet, dass jedes Packmittel die für das exakte Aufbringen des jeweiligen Farbsatzes notwendige Orientierung oder Ausrichtung (auch Nullposition) in Bezug auf den jeweiligen Druckkopf aufweist, sodass nach dem Aufbringen sämtlicher Farbsätze ein hoch qualitativer Mehrfarbdruck erreicht ist. Die Halte- und Zentriereinheiten sind Bestandteil des jeweiligen Transportelementes, d.h. die Packmittel werden an den Übergabebereichen, an denen die Transportelemente aneinander anschließen, jeweils von einer Halte- und Zentriereinheit des in Transportrichtung vorausgehenden Transportelementes an eine Halte- und Zentriereinheit des in Transportrichtung anschließenden Transportelementes übergeben. Dies ist zumindest konstruktiv und steuerungstechnisch aufwendig, bedeutet aber auch, dass die an einem Transportelement für das jeweilige Packmittel vorgenommene Zentrierung und Ausrichtung bei der Übergabe verloren geht, d.h. nach der Übergabe erneut ein Zentrieren und Ausrichten notwendig sind. Das Ausrichten der Packmittel erfolgt beispielsweise durch eine mechanische Zentrierung sowie unter Verwendung von Sensoren, die an den Packmitteln vorhandene Markierungen oder Referenzmerkmale erfassen, wobei dies Referenzmerkmale oder Markierungen beispielsweise optischer, elektronischer oder magnetischer Art sind. Das an jedem Transportelement notwendigen Neuausrichten der Packmittel beansprucht zusätzliche Zeit und kann daher zu einer merklichen Reduzierung der Leistung (behandelte Packmittel je Zeiteinheit) der Vorrichtung führen. Das Dokument DE 10 2017 050 490 A1 zeigt eine Behandlungsvorrichtung mit nur einem Transportelement. Weiterhin zeigt die DE196 54 658 A1 eine Vorrichtung zur Herstellung von Behältern mit einem Aufsatzelement.

Aufgabe der Erfindung ist, eine Vorrichtung aufzuzeigen, die bei reduziertem Steuerungsaufwand die Behandlung von Packmitteln, wie Flaschen, Dosen oder dergleichen Behältern in einem Arbeitsprozess ermöglicht, der in mehreren zeitlich getrennten Arbeitsschritten an wenigstens zwei eine vorrichtungsinterne Transportstrecke bildenden und in Transportrichtung dieser Transportstrecke aufeinander folgenden Transportelementen durchgeführt wird, und zwar mit hoher Leistung und bei exakte jeweils ausgerichteten Packmitteln. Zur Lösung dieser Aufgab ist eine Vorrichtung entsprechend dem Patentanspruch 1 ausgebildet.

Packmittel auch im Sinne der Erfindung sind insbesondere Flaschen, Dosen oder dergleichen Behälter. Ein Mehrfachdruck im Sinne der Erfindung ist generell ein mit mehreren Druckbildern oder Drucksätzen erzeugter Druck, vorzugsweise ein Mehrfarbendruck aus mehreren Farbsätzen unterschiedlicher Farben, beispielsweise Gelb, Magenta, Zyan und Schwarz.

Eine Besonderheit der erfindungsgemäßen Vorrichtung besteht darin, dass die einzelnen Spann- oder Halte- und Zentriereinheiten nicht Bestandteil der Transportelemente sind, sondern von diesen Transportelementen unabhängige Funktionselemente, sodass trotz Ausbildung der vorrichtungsinternen Transportstrecke mit mehreren in Transportrichtung aufeinander folgenden eigenständigen Transportelementen jedes Packmittel während des gesamten Prozesses an ein und derselben Halte- und Zentriereinheit gehalten ist, d.h. diese Einheiten mit dem jeweiligen Packmittel von einem Transportelement an das in Transportrichtung folgende Transportelement weitergeleitet werden.

Die einzelnen Halte- und Zentriereinheiten sind dabei beispielsweise zumindest antriebsmäßig fest mit einem elektrischen Stellantrieb oder zumindest mit einem Funktionselement, beispielsweise mit einem Rotor eines solchen Stellantriebes verbunden, oder aber an den Transportelementen sind mit diesen mitbewegte Stellantriebe vorgesehen, die dann nach der Übergabe der jeweiligen Halte- und Zentriereinheit an diese angekuppelt werden, sodass mit den Stellantrieben dann eine Ausrichtung der Packmittel bzw. der Nulllage und/oder ein Drehen der Packmittel beim Bedrucken um ihre Achse erfolgen kann.

Weiterbildungen, Vorteile und Anwendungsmöglichkeiten der Erfindung ergeben sich auch aus der nachfolgenden Beschreibung von Ausführungsbeispielen und aus den Figuren. Dabei sind alle beschriebenen und/oder bildlich dargestellten Merkmale für sich oder in beliebiger Kombination grundsätzlich Gegenstand der Erfindung, unabhängig von ihrer Zusammenfassung in den Ansprüchen oder deren Rückbeziehung. Auch wird der Inhalt der Ansprüche zu einem Bestandteil der Beschreibung gemacht.

Die Erfindung wird im Folgenden anhand der Figuren an Ausführungsbeispielen näher erläutert. Es zeigen:
Fig. 1 in vereinfachter Darstellung und in Seitenansicht eine Spann- oder Halte- oder Zentriereinheit (vielfach auch als Puck bezeichnet), zusammen mit einem an dieser Einheit hängend gehaltenem Packmittel in Form einer Flasche;
Fig. 2 und 3 in schematischer Funktionsdarstellung eine Vorrichtung zum Behandeln der Packmittel bzw. Flaschen in perspektivischer Ansicht sowie in Draufsicht;
Fig. 4 in vereinfachter perspektivischer Darstellung die an der Spann- oder Halte- und Zentriereinheit hängend gehaltene Flasche zusammen mit einem Stellantrieb;
Fig. 5 und 6, Fig. 7 und 8, Fig. 9 und 10, Fig. 11 und 12, Fig. 13 und 14 jeweils in Darstellungen ähnlich Figuren 2 und 3 weitere Ausführungsformen der erfindungsgemäßen Vorrichtung;
Fig. 15 in perspektivischer Einzeldarstellung eine an einem Transportelement der Vorrichtung der Figuren 13 und 14 vorgesehene Spann- oder Halte- und Zentriereinheit zusammen mit einer Flasche;
Fig. 16 in Positionen a und c nicht erfindungsgemässe Ausbildungen der Spannoder Halte- und Zentriereinheit zur Verwendung bei der Erfindung, jeweils zusammen mit einer Flasche und in Position b eine weitere erfindungsgemässe Ausbildung der Spann- oder Halte- und Zentriereinheit zur Verwendung bei der Erfindung;
Fig. 17 - 19 jeweils in schematischer Funktionsdarstellung Inkrementalgeber oder Sensorsysteme zur berührungslosen Erfassung der Dreh- oder Winkelposition und/oder der Drehbewegung der Behälter an den Halte- und Zentriereinheiten.

In den Figuren sind 1 Packmittel in Form von Flaschen, die einer Behandlung jeweils in mehreren Schritten unterzogen werden, und zwar derart, dass jede Flasche 1 am Beginn jedes Behandlungsschritts relativ zu der hierbei verwendeten Maschinenkomponente oder Behandlungsstation eine vorgegebene Orientierung, Ausrichtung und/oder Ausgangsstellung insbesondere auch in Bezug auf die Drehstellung um ihre Flaschenachse aufweist. Die Behandlung ist beispielsweise das Aufbringen eines Mehrfachdrucks auf die Außen- oder Mantelfläche der Flaschen 1 in mehreren Druckschritten, wobei in jedem Druckschritt z.B. ein Farbsatz eines Mehrfachdrucks in Form eines Mehrfarbendrucks aufgebracht wird. Hierbei wird die jeweilige exakt zentrierte und in der vorgegebenen Ausgangsstellung ausgerichtete Flasche 1 aus dieser Ausgangsstellung (Nullstellung) um ihre Flaschenachse gesteuert gedreht dadurch in der für das Bedrucken notwendigen Weise relativ zum verwendeten Druckaggregaten oder Druckkopf bewegt.

Die Flaschen 1 sind dabei bevorzugt bereits vor dem ersten Behandlungsschritt mit einer sensorisch erfassbaren Markierung 1.1 (Referenzpunkt oder Referenzmarke) ausgestattet oder aber werden während der ersten Behandlung mit einer solchen Markierung 1.1 versehen. In den Verfahrensschritten wird dann beispielsweise die Orientierung und Ausrichtung jeder Flasche anhand dieser sensorisch erfassten Markierung überprüft und ggs. motorisch neu durchgeführt, bevor die Behandlung, d.h. das Bedrucken unter Drehen der jeweiligen Flasche 1 um ihre Flaschenachse erfolgt.

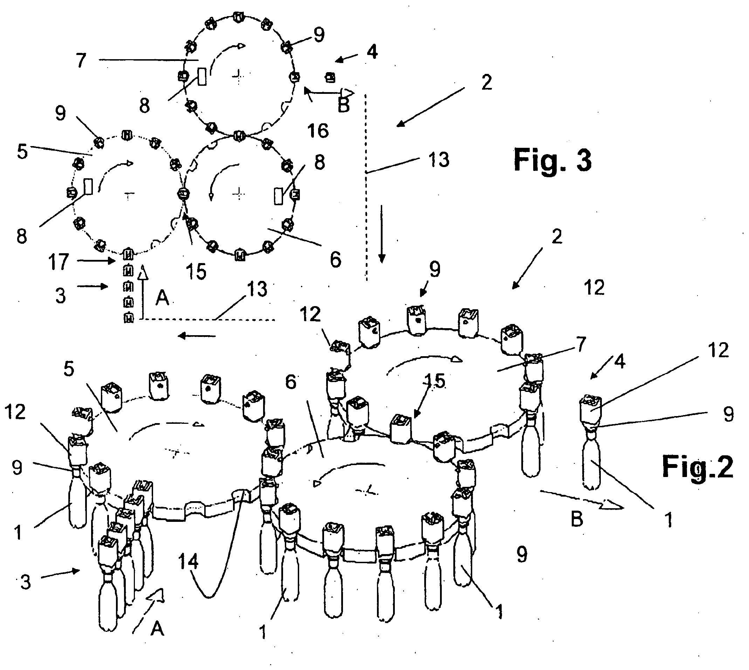

Zum Behandeln bzw. Bedrucken der Flaschen 1 dient beispielsweise die in den Figuren 2 und 3 schematisch dargestellte Vorrichtung 2, der die zu behandelnden Flaschen 1 an einem Behältereinlauf 3 in Richtung des Pfeils A zugeführt und aus der die behandelten Flaschen 1 an einem Behälterauslauf 4 in Richtung des Pfeils B entnommen werden. Die Vorrichtung 2 umfasst eine vorrichtungsinteme Transport-oder Förderstrecke für die Flaschen 1, und zwar bestehend aus mehreren, d.h. bei der dargestellten Ausführungsform aus insgesamt drei in Transportrichtung unmittelbar aneinander anschließenden rotor- oder transportsternartigen Transportelementen 5, 6 und 7, die jeweils um eine vertikale Maschinenachse umlaufend angetrieben werden, und von denen das Transportelement 5 auf den Behältereinlauf, das Transportelement 7 vor dem Behälterauslauf 4 und das Transportelement 6 zwischen den beiden Transportelementen 5 und 7 angeordnet ist. An den Transportelementen 5, 6 und 7, von denen die Transportelemente 5 und 7 gleichsinnig und das Transportelement 6 gegensinnig zu den Transportelementen 5 und 7 angetrieben sind, erfolgt die Behandlung, d.h. bei der dargestellten Ausführungsform das Bedrucken der Flaschen 1 in mehreren auf die Transportelemente verteilten Verfahrensschritten. Hierfür sind an den Transportelementen 5, 6 und 7 bzw. mit diesen umlaufend Behandlungsstationen, d.h. bei der dargestellten Ausführungsform Druckwerke vorgesehen, von denen in der Figur 3 jeweils eines schematisch mit 8 angedeutet ist. Die Druckköpfe 8 sind beispielsweise elektrisch oder elektronisch ansteuerbare Druckköpfe oder Druckwerke, z.B. nach dem Tintenstrahldruckprinzip arbeitende Druckköpfe (WO2004/00936) oder aber unter der Bezeichnung "Tonjet-Prinzip" arbeitende Druckköpfe.

Für das Ausrichten und das Drehen der Flaschen 1 während der Behandlung sind diese jeweils an einer Spann- oder Halte- und Zentriereinheit 9 hängend gehalten. Jede Halte- und Zentriereinheit 9 besteht bei der dargestellten Ausführungsform aus einem rotativ feststehenden Aufnahmeelement oder Gehäuse 10 und aus einem Flascheneinspannelement in Form eines Greifers oder einer Spanngabel 11, an der die jeweilige Flasche 1 an ihrem Mündungsbereich 1.2 durch Einspannen gehalten ist, und zwar mit ihrer Flaschenachse achsgleich oder im Wesentlichen achsgleich mit einer Achse AS der Halte- und Zentriereinheit 9. Auf dem Gehäuse 10 ist ein elektromotorischer Stellantrieb 12 vorgesehen, der antriebsmäßig mit der Spanngabel 11 verbunden ist und mit dem das Ausrichten der jeweiligen Flasche1 in Bezug auf die von einer Sensorik erfassten Markierung 1.1 und auch das Drehen der Flasche 1 um ihre Flaschenachse bzw. um die Achse AS bei der Behandlung erfolgen.

Die Besonderheit der Vorrichtung 2 besteht nun darin, dass jede Flasche 1 bereits an der Behälteraufgabe 3 und vor der Übergabe an das Transportelement 5, während des gesamten Transportes innerhalb der Vorrichtung 2 bzw. innerhalb der von den Transportelementen 5, 6 und 7 gebildeten vorrichtungsinternen Transportstrecke sowie auch noch am Behälterauslauf 4 an ein und derselben Halte- und Zentriereinheit 9 gehalten ist, d.h. jede Halte- und Zentriereinheit 9 mit der jeweiligen Flasche 1 vom Behältereinlauf 3 bis an den Behälterauslauf 4 mitgeführt wird und trotz mehrerer Transportelemente 5, 6 und 7 und der Aufteilung der Behandlungs-oder Prozessschritte auf mehrere Transportelemente 5, 6 und 7 eine Übergabe der Flaschen 1 von einer Halte- und Zentriereinheit an eine andere Halte- und Zentriereinheit nicht erfolgt. Erst am Ende des Behälterauslaufs, d.h. dort, wo die behandelten Flaschen 1 dann an einem nicht dargestellten äußeren Transporteur weitergeleitet werden, erfolgt ein Lösen der jeweiligen Flasche 1 von ihrem Halte- und Zentrierelement 9, welches dann für die weitere Verwendung, d.h. zur Aufnahme einer weiteren Flasche 1 über eine in der Figur 3 mit unterbrochenen Linien schematisch angegebene Transportstrecke 13 an den Anfang des Behältereinlaufs 3 zurückgefördert wird. Die Transportstrecke 13 umfasst beispielsweise eine Führung oder Führungsschiene sowie eine Transportkette oder einen Transportriemen.

An ihrem Umfang bilden die Transportelemente 5, 6 und 7 Aufnahmen 14, an denen jeweils ein Druckkopf 8 vorgesehen ist und an die die Halte- und Zentrierelemente 9 mit ihrem Gehäuse 10 in einer vorgegebenen Ausrichtung und Orientierung auch in Bezug auf das jeweilige Transportelement 5, 6 bzw. 7 andockbar sind, sodass jede an einer angedockten Hatte- und Zentriereinheit 9 hängend gehaltene Flasche 1 auch nach der Übergabe von dem Transportelement 5 an das Transportelement 6 bzw. von dem Transportelement 6 an das Transportelement 7 weiterhin die definierte Orientierung aufweist. Die Aufnahmen 14 sind in einem solchen Teilungsabstand am Umfang der Transportelemente 5, 6 und 7 vorgesehen, dass bei synchron angetriebenen Transportelement 5, 6 und 7 immer dann, wenn eine Aufnahme 14 die Übergabeposition 15 zwischen zwei Transportelementen 5, 6 bzw. 7 erreicht hat, sich dort auch eine Aufnahme 14 des anschließenden Transportelementes befindet und somit jede Halte- und Zentriereinheit 9 zusammen mit der an dieser gehaltenen Flaschen 1 unmittelbar vom Transportelement 5 an das Transportelement 6 bzw. vom Transportelement 6 an das Transportelement 7 unter Beibehaltung seiner Ausrichtung und Orientierung und damit auch unter Beibehaltung der Ausrichtung und Orientierung der Flasche 1 übergeben wird.

In einer einfachen Variante wird die Flasche 1 lediglich im jeweils vorausgehenden Transportelement auf das nachfolgende Transportelement vorpositioniert. Das Winkelsignal wird beispielsweise cirka 5° vor dem nächsten Encoder gefahren. Nach der Übergabe der Flasche 1 wird diese erneut in Rotation gebracht und der Encoderring gibt dann die Istposition weiter.

Der wesentliche Aspekt der erfindungsgemäßen Vorrichtung ist darin zu sehen, dass die Sensoreinheit zur berührungslosen Erfassung der Drehposition der Drehvorrichtung ausgebildet ist. Durch die berührungslose Positionserfassung ist eine äußerst zuverlässige Bestimmung der aktuellen Drehposition möglich. Weiterhin vorteilhaft entfällt aufgrund der berührungslosen Positionserfassung eine aufwändige Verkabelung der vorzugsweise auf getrennten Maschinenteilen angeordneten Sensoreinheit und Drehvorrichtung. Auch können durch die Auswertung der erfassten Drehposition der Drehvorrichtung ggf. durch im Rahmen der Ansteuerung der getrennten Maschinenteile entstehende Positionierungsfehler über eine Steuer- und Auswerteeinheit kompensiert werden, d.h. im Rahmen der Winkelerfassung entstehende Toleranzen können schnell und einfach kompensiert werden.

Besonders vorteilhaft ist die Sensoreinheit in Form einer elektro-optischen oder elektro-magnetischen Sensoreinheit ausgebildet. Optische Sensorsysteme sind äußerst präzise, allerdings auch schmutzanfällig, wohingegen magnetische Sensorsysteme sehr robust und schmutzunempfindlich sind. Die Drehvorrichtung weist hierzu um die Drehachse rotierende Skaliermittel auf, die über die jeweilige Sensoreinheit berührungslos erfassbar sind.

Erfingdungsgemäß erfolgt die Erfassung der Drehposition D der Drehvorrichtung 4 über eine berührungslos arbeitende Sensoreinheit 5. Die Drehposition D der Drehvorrichtung 4 wird vorzugsweise in Form eines Winkelbetrages in Bezug auf eine Referenzdrehposition DR angegeben, und zwar jeweils bezogen auf eine Drehbewegung um die Drehachse DA.

Vorteilhaft ist die Sensoreinheit 5 als elektro-optische oder elektro-magnetische Sensoreinheit ausgebildet, die mit Skaliermittel 6 zusammenwirkt, die mit der Drehvorrichtung 4 verbunden sind. Hierbei sind die Skaliermittel 6 vorzugsweise an der Mantelfläche der um die Drehachse DA rotierenden Drehvorrichtung 4 angeordnet, d.h. die Skaliermittel 6 rotieren selbst um die Drehachse DA, und zwar derart, dass diese berührungslos über die Sensoreinheit 5 erfassbar sind. Die Skaliermittel 6 weisen zur Anzeige unterschiedlicher Drehpositionen D der Drehvorrichtung 4 mehrere, vorzugsweise in regelmäßigen Abständen vorgesehene Messmarken 6.1 auf.

In einer bevorzugten Ausführungsform ist die Drehvorrichtung 4 durch ein Drehtellerelement gebildet, welches über eine in den Figuren nicht dargestellte Antriebseinheit um die Drehachse DA antreibbar ist, wobei die Ansteuerung der Antriebseinheit vorzugsweise über die Steuer- und Auswerteinheit SA erfolgt. Das Drehtellerelement 4 weist einen im Wesentlichen zylinderförmigen Grundkörper auf, der eine konzentrisch zu Drehachse DA verlaufende Zylindermantelfläche 4.1 umfasst.

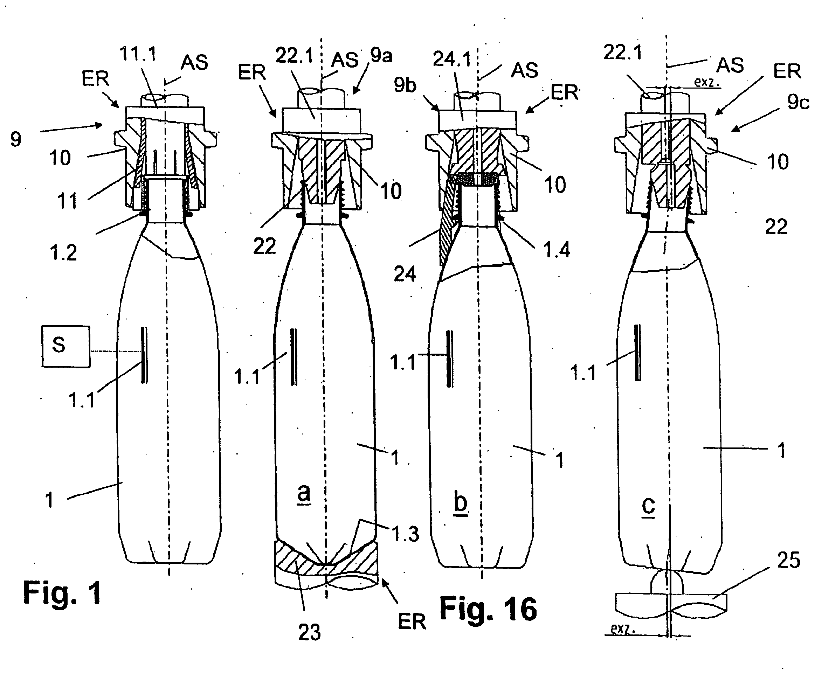

Gemäß dem in den Figuren 1 bis 5 dargestellten Ausführungsbeispiel sind die Sensoreinheit 5 und das Drehtellerelement 4 näherungsweise in einer gemeinsamen, senkrecht zur Drehachse DA verlaufenden Ebene angeordnet, so dass über die Sensoreinheit 5 berührungslos die Zylindermantelfläche 4.1 des Drehtellerelementes 4 erfasst werden kann. Zur Bestimmung der Drehposition D des Drehtellereiementes 4 über die berührungslose Sensoreinheit 5 sind die Skaliermittel 6 auf der Zylindermantelfläche 4.1 des Drehtellerelementes 4 angeordnet.

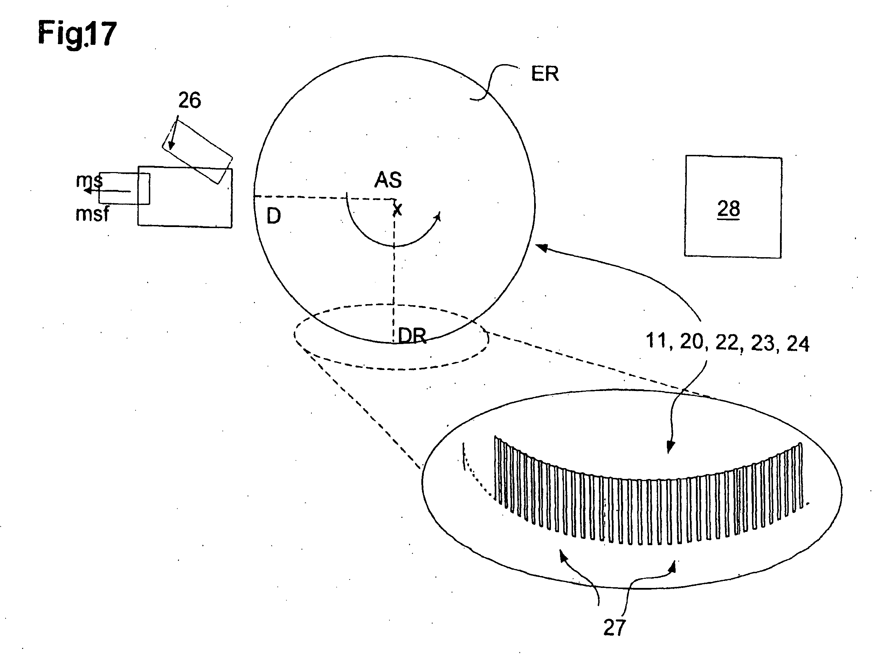

Der jeweilige Sensor zur berührungslosen Erfassung der Markierung 1.1 an der jeweiligen Flasche 1 ist in der Figur 1 schematisch mit S angedeutet. Zusätzlich hierzu ist ein Sensorsystem zur berührungslosen Erfassung der Dreh- oder Winkelstellung des jeweiligen Flaschenspannelementes, nämlich der jeweiligen Spanngabel 11 und damit der jeweiligen Flasche 1 nach der Übergabe an eine Aufnahme 14 der Transportelemente 5, 6 und 7 vorgesehen. Dieses Sensorsystem umfasst in der nachstehend im Zusammenhang mit den Figuren 17 - 19 noch näher beschriebenen Weise zumindest Inkrementalgeber- oder Encoderringe ER an jedem Flascheneinspannelement bzw. an jeder Spanngabel 11 oder an einem Element der betreffenden Halte- und Zentriereinheit 9, welches beim Drehen des Flascheneinspannelement um die Achse AS mitdreht. Die Encoderringe ER sind Bestandteil der Halte- und Zentriereinheit 9 und werden mit diesen mit bewegt. Die Encoderringe ER sind mit Sensoreinheiten, die beispielsweise an den Transportelemente 5, 6 und 7 oder den dortigen Aufnahmen vorgesehen sind, vorzugsweise berührungslos abtastbar. Die Encoderringe ER bilden mit den diese abtastenden Sensoreinheiten also "offene" Encoder oder Inkrementalgeber. Unter "Encoderring" ist im Sinne der Erfindung ganz allgemein eine Anordnung von abtastbaren, vorzugsweise von berührungslos Markierungen oder Messmarken zu verstehen, die um eine Dreh- oder Schwenkachse von Funktionselementen, d.h. z.B. um die jeweilige Achse AS der Behälter- oder Flascheneinspannelemente, deren Winkel- oder Drehposition erfasst werden soll, auf wenigstens einem diese Achse zumindest teilweise konzentrisch umschließenden Ring angeordnet sind.

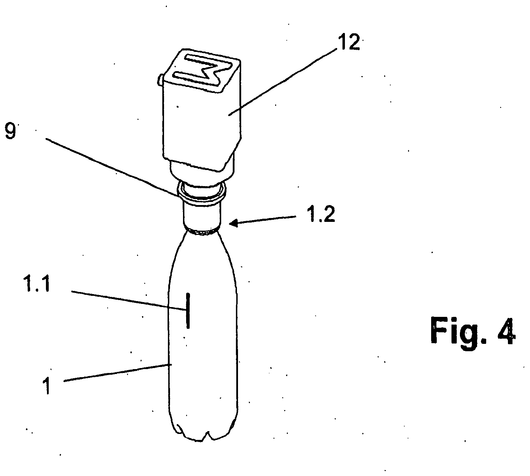

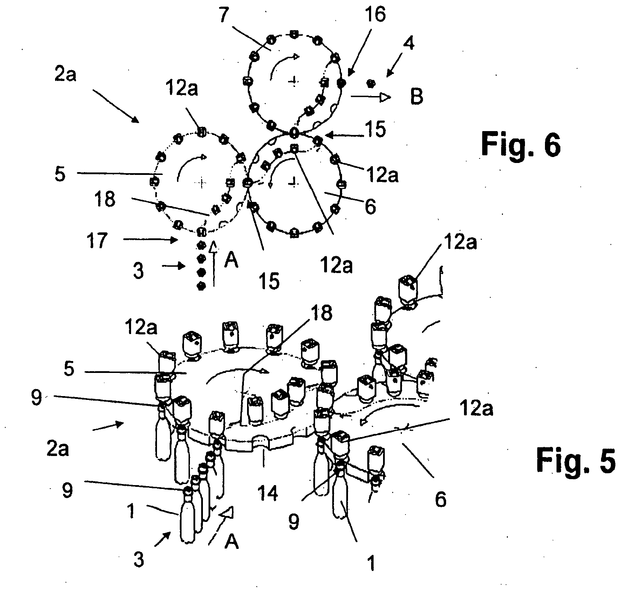

Vorstehend wurde davon ausgegangen, dass jede Halte- und Zentriereinheit 9 einen eigenständigen Stellantrieb 12 aufweist. Die Figuren 4 und 5 zeigen als weitere Ausführungsform eine Vorrichtung 2a, bei der die Flaschen 1 ebenfalls am Behältereinlauf 3 jeweils von einer Halte- und Zentriereinheit 9 aufgenommen und an ein und derselben Halte- und Zentriereinheit 9 durch die Vorrichtung 2a bis an das Ende des Behälterauslaufs 4 bewegt und erst dort von der jeweiligen Halte- und Zentriereinheit 9 frei gegeben werden, die dann ihrerseits wiederum über die Transportstrecke 13 an den Behältereinlauf 3 zurückbewegt wird. Jede Flasche 1 bleibt somit wiederum über den gesamten Prozess hinweg mit ein und derselben Halte-und Zentriereinheit 9 verbunden. Die Vorrichtung 2a unterscheidet sich von der Vorrichtung 2 aber dadurch, dass die den Stellantrieben 12 entsprechenden Stellantriebe 12a nicht fest an den Halte- oder Zentriereinheiten 9 vorgesehen sind, sondern dass die Transportelemente 5, 6 und 7 die Stellantriebe 12a aufweisen, wobei die Anzahl der Stellantriebe 12a beispielsweise gleich der Anzahl der Aufnahmen 14 des jeweiligen Transportelementes 5, 6 bzw. 7 ist.

Die Stellantriebe 12a sind jeweils z.B. mit einem nicht dargestellten Hilfstransporteur derart bewegbar, dass beim Andocken und/oder bei der Übergabe einer Halte- und Zentriereinheit 9 an eine Aufnahme 14 eines Transportelementes 5, 6 bzw. 7 ein Stellantrieb 12a des betreffenden Transportelementes an die Halte- und Zentriereinheit 9 bzw. an die dortige Spanngabel 11 angekoppelt wird und der betreffende Stellantrieb 12a jeweils vor Erreichen der Übergabeposition 15 oder vor Erreichen der Übergabeposition 16 zwischen dem Transportelement 7 und dem Behälterauslauf 4 von der Halte- und Zentriereinheit 9 abgekoppelt und zur Vermeidung einer Kollision der Stellantriebe 12a aus dem Teilkreis der Aufnahmen 14 herausbewegt und synchron mit der Drehbewegung des jeweiligen Transportelementes 5, 5a bzw. 7 an die Übergabeposition 17 zwischen dem Behältereinlauf 3 und dem Transportelement 5 bzw. an die jeweilige Übergabeposition 15 zurückbewegt wird, wie dies mit der Linie 18 dargestellt ist.

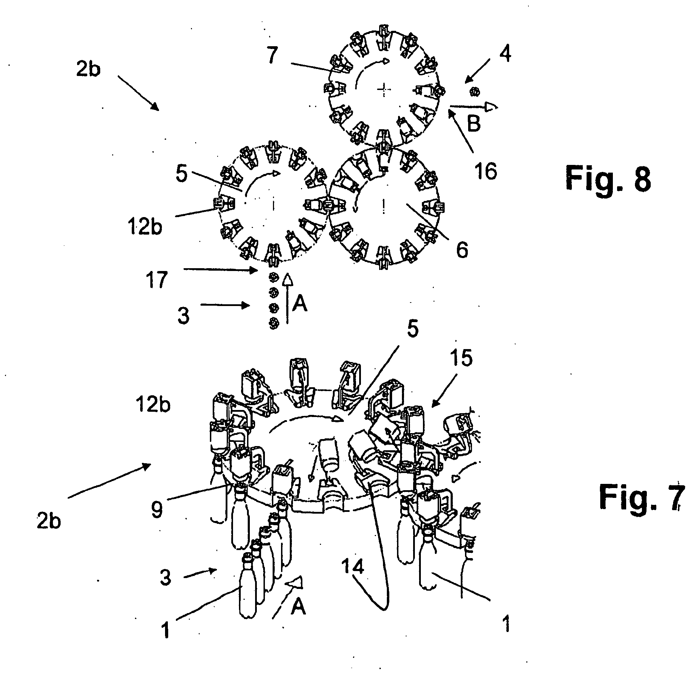

Die Figuren 7 und 8 zeigen als weitere Ausführungsform eine Vorrichtung 2b, die sich von der Vorrichtung 2a im Wesentlichen nur dadurch unterscheidet, dass die dortigen Stellantriebe 12b zur Vermeidung einer Kollision und nach dem Abkoppeln von der jeweiligen Halte- und Zentriereinheit 9 von ihrer zugehörigen Aufnahme 14 weggeschwenkt werden, und zwar bei der dargestellten Ausführungsform jeweils um eine tangential zur Drehbewegung des betreffenden Transportelementes 5, 6 bzw. 7 orientierten Schwenkachse.

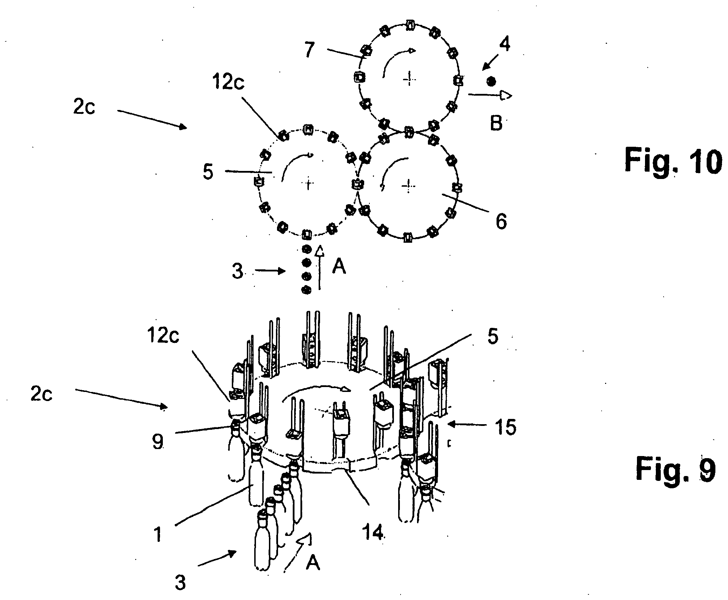

Die Figur 9 und 10 zeigen als weitere Ausführungsform eine Vorrichtung 2c, die sich von der Vorrichtung 2a dadurch unterscheidet, dass die dort mit 12c bezeichneten Stellantriebe nach dem Abkoppeln von der jeweiligen Halte- und Zentriereinheit 9 zur Vermeidung von Kollisionen in vertikaler Richtung, d.h. in Richtung parallel zur Drehachse der Transportelemente 5, 6 und 7 angehoben werden, und zwar an einander anschließenden Transportelementen jeweils in unterschiedliche Höhe.

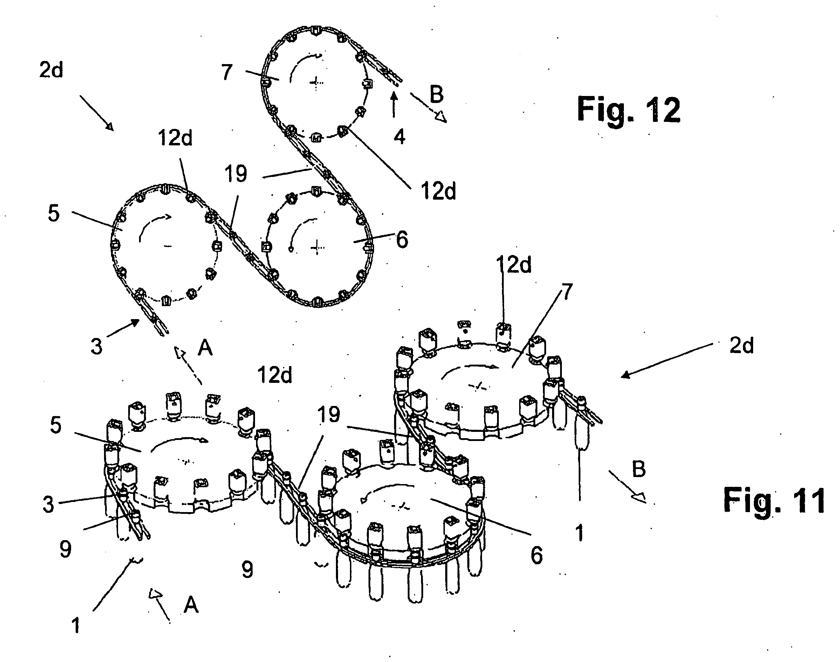

Die Figuren 11 und 12 zeigen als weitere Ausführungsform eine Vorrichtung 2d, die sich von den Vorrichtungen 2, 2a - 2c dadurch unterscheidet, dass die Transportelemente 5, 6 und 7 nicht unmittelbar aneinander anschließen, sondern zwischen diesen Transportelementen Zwischentransporteure 19 beispielsweise in Form von Schienen, Transportketten usw. vorgesehen sind, an denen die Halte- und Zentriereinheiten 9 mit ihren Gehäusen ausgerichtet geführt bzw. gehalten sind. Der Behältereinlauf 3 und der Behälterauslauf 4 sind bei dieser Ausführungsform ähnlich diesen Zwischentransporteuren 19 ausgeführt.

Bei der Vorrichtung 2d bleibt jede Flasche 1 ebenfalls über den gesamten Prozess, der in mehreren Teilschritten an den Transportelementen 5, 6 und 7, d.h. an unterschiedlichen Abschnitten oder Teilstrecken der vorrichtungsinternen Transportstrecke durchgeführt wird, jeweils mit ein und derselben Halte- und Zentriereinheit verbunden. Bei der Vorrichtung 2d sind die Stellantriebe 12d an den Transportelementen 5, 6 und 7 vorgesehen, wobei jeweils ein Stellantrieb 12d jeder Aufnahme 14 zugeordnet ist und an die jeweilige, an eine Aufnahme 14 übergebene oder angedockte Halte- und Zentriereinheit 9 angekuppelt wird. Durch die Zwischentransporteure 19 ist ein Wegbewegen der Stellantriebe 12d zur Vermeidung einer Kollision nicht erforderlich.

Bei den Vorrichtungen 2, 2a - 2e ist die die Markierungen oder Referenzmarken 1.1 erfassende Sensorik beispielsweise an den Halte- und Zentriereinheiten 9 und/oder an den Transportelementen 5, 6 und 7 vorgesehen.

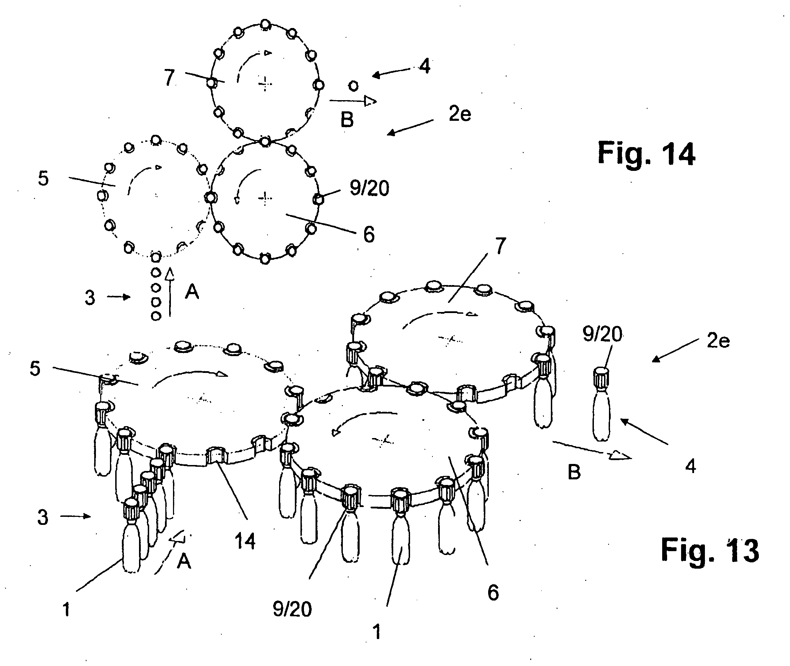

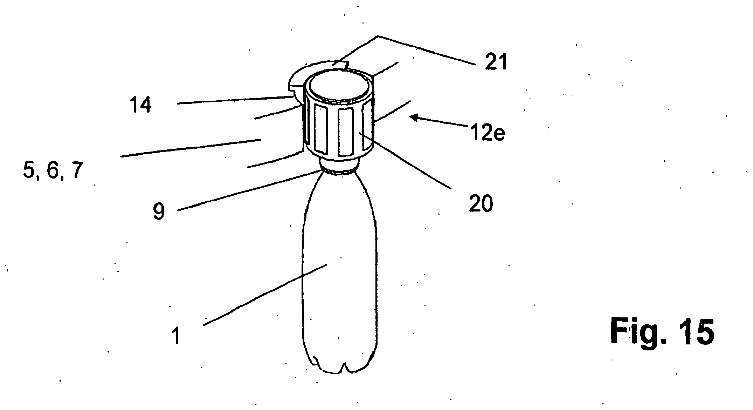

Die Figuren 14 - 15 zeigen eine Vorrichtung 2e, bei der anstelle der Stellantriebe 12, 12a - 12d "offene" Stellantriebe 12e verwendet sind. Hierfür sind die Halte- und Zentriereinheiten 9 jeweils mit einem Stellantriebs-Rotor 20 ausgeführt, der zumindest antriebsmäßig fest mit dem jeweiligen Flascheneinspannelement in Form der Spanngabel 11 verbunden ist. Den Rotoren 20, an denen auch der jeweilige Encoder-Ring ER vorgesehen ist, sind Statoren 21 an den Aufnahmen 24 der Transportelemente 5, 6 und 7 der Vorrichtung 2e zugeordnet, sodass nach Übergabe einer Halte- und Zentriereinheit 9 bzw. des zugehörigen Rotors 20 an eine Aufnahme 24 der Rotor 20 mit dem in der Aufnahme vorgesehenen Stator 21 einen elektrischen Stellantrieb 12e bildet, mit dem die jeweilige an der Halte- und Zentriereinheit 9 gehaltene Flasche 1 zum Ausrichten und während der Behandlung um ihre Flaschenachse geschwenkt und gedreht werden kann, und zwar wiederum auch unter Berücksichtigung der von der Sensorik einer elektrischen Steuereinrichtung erfassten Markierung oder Referenzmarke 1.1. Die die Referenzmarken 1.1 erfassende Sensorik ist bei der Vorrichtung 2e beispielsweise an den Transportelementen 5, 6 und 7 oder an den dortigen Aufnahmen 24 vorgesehen.

Auch bei der Vorrichtung 2e ist jede Flasche 1 über den gesamten Prozess, der in mehreren Prozessschritten an unterschiedlichen Transportelementen 5, 6 und 7 der vorrichtungsinternen Transportstrecke durchgeführt wird, mit ein und demselben Halte- und Zentrierelement 9 verbunden. Durch entsprechende Ansteuerung der Statoren 21 insbesondere bei der Übergabe von einem Transportelement an das nächstfolgende Transportelement ist grundsätzlich ein erneutes Ausrichten der Flaschen 1 nach der Übergabe von einem Transportelement an das anschließende Transportelement nicht erforderlich. Die Ansteuerung der Statoren 21 erfolgt in jedem Fall so, dass während der Übergabe nur jeweils ein Stator 21 aktiviert ist.

Die Figur 16 zeigt in den Positionen a und c nicht erfindungsgemässe Ausführungsformen der Halte- und Zentriereinheiten 9a bzw. 9c und an Position b eine weitere erfindungsgemässe Ausführungsform der Halte- und Zentriereinheit 9b, die anstelle der Halte- und Zentriereinheiten 9 verwendet werden können.

Die Halte- und Zentriereinheit 9a besteht wiederum aus dem Gehäuse 10, in welchem als Flascheneinspannelement anstelle des Greifers oder der Spanngabel 11 ein Zentrier- und Spannkegel 22 vorgesehen ist, der mit Hilfe des jeweiligen Stellantriebes zum Ausrichten der Flasche 1 um die Achse AS dreh- oder schwenkbar im Gehäuse 10 angeordnet ist. Der Halte- und Zentriereinheit 9a ist ein Behälterträger 23 zugeordnet, der bei dieser Ausführungsform von einem Behälterteller gebildet ist, auf dem die jeweilige Flasche 1 mit ihrem Boden 1.3 aufsteht und dort durch entsprechende Formgebung des Behälterträgers 23 in Bezug auf die Achse AS zentriert und formschlüssig gehalten ist. Durch eine entsprechende axiale Zustellbewegung der Halte- und Zentriereinheit 9a und/oder des Behälterträgers 23 ist die jeweilige Flasche 1 zwischen dem in die Flaschenmündung 1.2 hineinreichenden und die Flasche 1 dort zentrierenden Halte- und Zentrierkegel 22 und dem um die Achse AS drehbaren Behälterträger 23 für das Ausrichten und das Drehen während der Behandlung eingespannt. Die Drehbewegung der Flasche 1 erfolgt durch Reibschluss über den Spann- und Zentrierkegel 22 und der Flaschenmündung 1.2. Grundsätzlich besteht aber auch die Möglichkeit einer Übertragung der Dreh- und Schwenkbewegung durch eine formschlüssige Verbindung, beispielsweise durch einen Stellantrieb, der auf den Behälterträger 23 einwirkt. Bei dieser Ausführungsform ist ein Encoderring ER am Zentrierkonus 22 oder an einem mit dem Zentrierkonus 22 antriebsmäßig verbundenen Element oder Abschnitt 22.1 vorgesehen. Ein weiterer Encoderring ER befindet sich an dem Behälterträger 23 oder an einer mit diesem Behälterträger 23 antriebsmäßig verbundenen Element.

Bei der Halte- und Zentriereinheit 9b ist der das Flascheneinspannelement oder Gegenlager bildende Behälterträger 24 in die Halte- und Zentriereinheit 9b integriert ist, und zwar für ein Zusammenwirken mit dem im Bereich der Flaschenmündung 1.2 ausgebildeten Behälterflansch 1.4 (Neck-Ring). Die Übertragung der Dreh- oder Schwenkbewegung zum Ausrichten und Drehen der Flasche 1 erfolgt bei dieser Ausführungsform wiederum reib- oder kraftschlüssig. Bei dieser Ausführungsform ist der Encoderring ER am Behälterträger 24 bzw. an einem mit dem Behälterträger 24 antriebsmäßig verbundenen Element oder Abschnitt 24.1 vorgesehen.

Die Zentrier- und Spanneinheit 9c unterscheidet sich von der Zentrier- und Spanneinheit 9a zunächst dadurch, dass der Spann- und Zentrierkegel 22 mit seiner Kegelachse exzentrisch zur Achse AS angeordnet ist, und dass anstelle des Behälterträgers 23 ein Behälterträger 25 vorgesehen ist, der bei zwischen der Halte- und Zentriereinheit 9c und dem Behälterträger 25 eingespannten Flasche 1 im Wesentlichen punktförmig gegen den mittleren Bereich des Flaschenbodens 1.3 anliegt. Die Flasche 1 ist in der Position c) übertrieben verformt dargestellt. Mit der Halte- und Zentriereinheit 9c und dem zugehörigen Behälterträger 25, der beispielsweise wiederum die Achse AS frei drehbar ist, ist ein Rückformen der verformten Flasche 1 durch Drehen oder Schwenken des Halte- und Zentrierkegels 22 um die Achse AS in der Weise möglich, dass die Mantelfläche der Flasche 1 bei der späteren Behandlung die bestmögliche Parallelität zu der jeweiligen Behandlungsstation bzw. zu dem Druckkopf 8 aufweist, d.h. die Flasche 1 für einen bestmöglichen Rundlauf zu der sich aus der verformten Mantelfläche ergebenden Rotationsachse ausgerichtet ist. Das Ausrichten der Flaschen 1 bezüglich der Referenzmarke oder Markierung 1.1 sowie das Drehen der Flasche erfolgen bei dieser Ausführung durch Drehen oder Schwenken des Gehäuses 10 um die Achse AS. Anstelle des Spann- und Zentrierkegels 22 können auch andere exzentrische zur Achse AS verstellbare Elemente für das Einspannen und Rückformen von verformten Flaschen 1 vorgesehen sein. Bei dieser Ausführungsform ist der Encoderring ER wiederum an dem zumindest antriebsmäßig mit dem Spann- und Zentrierkegel 22 verbundenen Abschnitt 22.1 vorgesehen.

Ein ganz wesentlicher Aspekt der erfindungsgemäßen Vorrichtung besteht darin, dass die Sensormittel vorzugsweise zur berührungslosen Erfassung und/oder Steuerung der Dreh- oder Winkelposition ausgebildet sind und hierfür die entsprechenden Encoderringe ER an den Flascheneinspannelementen, an denen die Flaschen 1 während des Transportes vom Behältereinlauf 3 bis an den Behälterauslauf 4 ständig gehalten sind, oder aber an mit diesen Flascheneinspannetementen mit drehenden Elementen oder Abschnitten vorgesehen sind. Durch die berührungslose Erfassung der Dreh- oder Winkelposition ist eine äußerst zuverlässige Bestimmung der exakten Winkel- oder Drehposition der Flaschen 1 möglich. Weiterhin entfällt aufgrund der berührungslosen Positionserfassung die Notwendigkeit einer aufwendigen Verkabelung der auf getrennten Maschinenelementen angeordneten Komponenten des Sensorsystems, welches auch in der oben beschriebenen Weise als "offenes" System ausgebildet werden kann. Durch die Auswertung der erfassten Winkel- oder Drehposition der Flaschenspannelemente (Spanngabel 11, Spann-und Zentrierkegel 22, Behälterträger 23) können gegebenenfalls auch im Rahmen der Ansteuerung entstehende Positionierungsfehler über eine Steuer- und Auswerteinheit oder -elektronik kompensiert werden, d.h. im Rahmen der Winkelerfassung entstehende Toleranzen können schnell und einfach kompensiert werden. Dadurch, dass die Encoderringe ER jeweils an den Flascheneinspannelementen vorgesehen bzw. mit diesen mitgedreht werden und die Flaschen 1 jeweils auf dem gesamten Transportweg zwischen dem Behältereinlauf 3 und dem Behälterauslauf 4 an ein und demselben Flascheneinspannelement bzw. an ein und derselben Halte- und Zentriereinheit 9, 9a - 9c ständig gehalten sind, ist durch Abtastung der Encoderringe ER auch eine präzise Erfassung der Winkel- oder Drehstellung jeder Flasche 1 im Bezug auf für die Flaschenform typische Flaschenmerkmale und/oder im Bezug auf die jeweilige Markierung 1.1 möglich.

Besonders vorteilhaft ist das Sensorsystem in Form eines elektro-optischen oder elektro-magnetischen Sensorsystems ausgebildet. Elektro-optische Sensorsysteme sind äußerst präzise, allerdings durch ein eventuelles Verschmutzen störanfällig, wohingegen magnetische Sensorsysteme sehr robust und auch schmutzunempfindlich sind.

Wie der Figur 17 zu entnehmen ist, weist jeder Encoderring ER eine die Achse AS kreisringförmig umschließende und von einer Sensoreinheit 26 berührungslos erfassbare Skalierung 27 auf, und zwar beispielsweise an einer die Achse AS konzentrisch umschließenden Kreiszylinderfläche. Die Erfassung der Winkel- oder Drehposition D des jeweiligen Encoderrings ER und damit des diesen Encoderring aufweisenden Flaschenspannelementes erfolgt über die berührungslos arbeitende Sensoreinheit 26 bevorzugt in Form eines Winkelbetrages der Drehbewegung um die Achse AS im Bezug auf eine Referenzwinkelposition oder Referenzdrehposition DR.

Sensoreinheit 26 und der Encoder ER sind nach dem Andocken der jeweiligen Halte- und Zentriereinheit 9, 9a - 9c an einer Aufnahme 14 zumindest näherungsweise in einer gemeinsamen senkrecht zur Achse AS orientierten Ebene angeordnet, sodass die Sensoreinheit 26 die auf der Kreiszylinderfläche des Encoderrings ER vorgesehene Skalierung 27 erfassen kann. Selbstverständlich sind auch andere Anordnungen der Skalierung 27 auf dem jeweiligen Encoderring ER möglich, beispielsweise auf einer die Achse AS konzentrisch umschließenden Kegelfläche oder auf einer die Achse AS umschließenden und in einer Ebene senkrecht zu dieser Achse orientierten Ringfläche, wobei dann das Sensorelement der Skalierung gegenüberliegend entsprechend angeordnet ist.

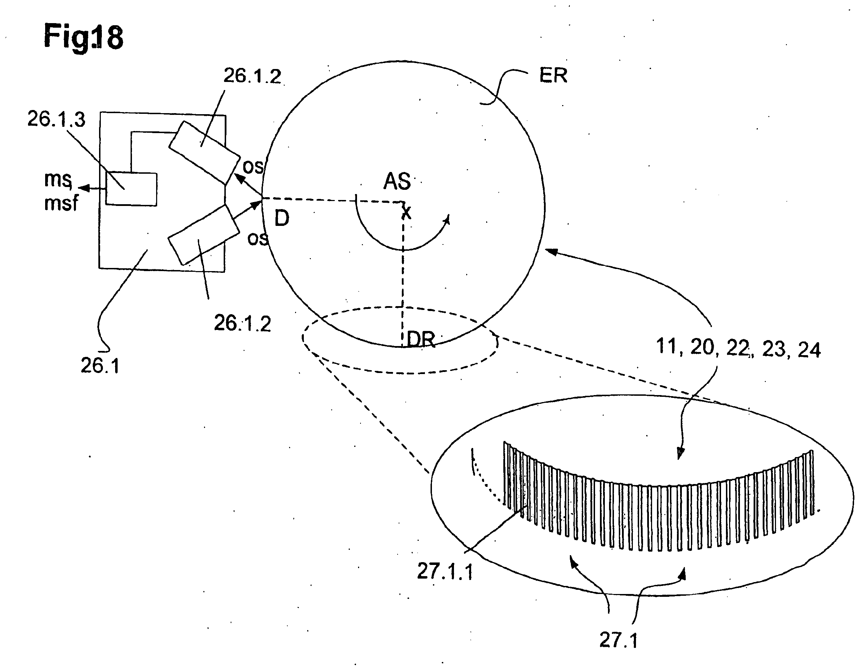

Vorteilhaft ist die Sensoreinheit 26 eine elektro-optische oder elektro-magnetische Sensoreinheit 26.1, die mit der für diese Einheit passend ausgebildeten Skalierung 27.1 zusammenwirkt, die zur Anzeige unterschiedlicher Drehpositionen D des jeweiligen Encoderrings ER mehrere, vorzugsweise in gleichmäßigen Winkelabständen vorgesehene Markierungen oder Messmarken 27.1 aufweist (Figur 18). Gesteuert durch das von dem jeweiligen Sensorelement 26.1 gelieferte Messsignal ms und Referenzsignal msf erfolgt über eine Steuer- und Auswertelektronik 28, die beispielsweise von einem zentralen Steuerrechner der jeweiligen Vorrichtung 2, 2a - 2e gebildet ist, das gesteuerte Ausrichten der jeweiligen Flasche 1 durch Drehen des Flascheneinspannelementes mittels des Stellantriebes 12, 12a - 12d um de Achse AS.

Zur Erfassung der Dreh- oder Winkelposition D des Encoderrings ER wird von einer elektro-optischen Sendereinheit 26.1.1, die im einfachsten Fall von einer Leucht-oder Laserdiode gebildet ist, erzeugt optische Signal os erzeugt, und zwar in Form wenigstens eines auf die Skalierung 27.1 bzw. auf die dortigen, reflektierenden Messmarken 27.1.1 gerichteten Lichtstrahls. An den Messmarken 27.1.1 wird das optische Signal os zumindest abschnittsweise reflektiert und somit bei rotierendem Encoderring ER ein vorzugsweise gepulstes optisches Signal os' erzeugt, welches von wenigstens einer optischen Empfangseinheit 26.1.2 erfasst wird. Das über die optische Empfangseinheit 26.1.2 erfasste, reflektierte optische Signal os' wird einer optischen Empfangseinheit 26.1.2 zugeführt und in dieser ausgewertet, und zwar zur Erzeugung des elektrischen Messsignals ms und des Referenzsignals msf. Beide Signale werden an die Steuer- und Auswerteinheit 28 u.a. zur Ansteuerung des jeweiligen Stellantriebes 12, 12a -12d übertragen.

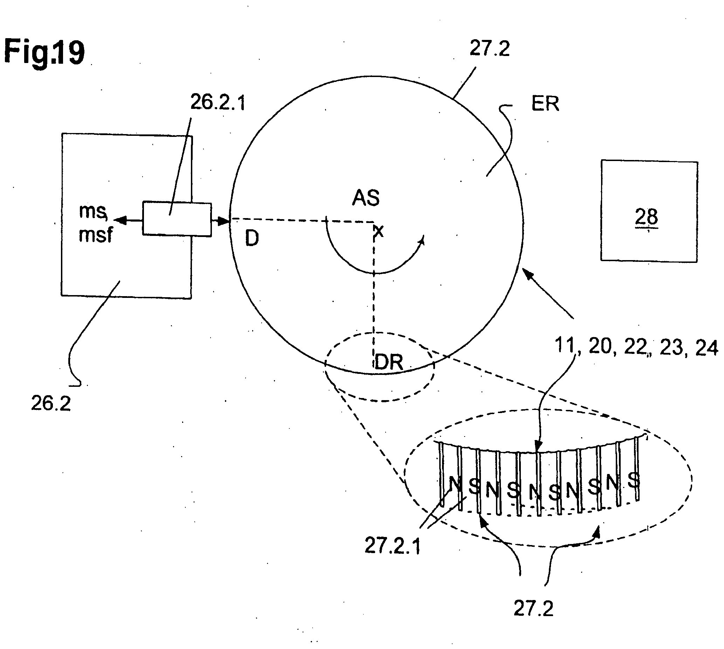

Die Figur 19 zeigt als weitere mögliche Ausführungsform einen der Encoderringe ER zusammen mit einer Sensoreinheit, die als elektro-magnetische Sensoreinheit 26.2 ausgebildet ist und die über wenigstens eine magneto-resistive Sensorelektronik 26.2.1, d.h. eine auf ein Magnetfeld und/oder eine Magnetfeldänderung ansprechende Sensorelektronik 26.2.1 aufweist. Die mit den Flascheneinspannelementen, d.h. mit den Spanngabeln 11, dem Rotoren 20, den Spann- und Zentrierkegeln 22 und den Behälterträgern 24 mitdrehenden Encoderring ER weisen eine Skalierung 27.2 auf, die von einem sich in der Feldstärke entlang der Skalierung 27.2 ändernde Magnetfeld gebildet ist. Hierfür ist der jeweilige Encoderring ER vorzugsweise mit einer die Achse AS ringförmig umschließenden Magnetträgerschicht ausgeführt, die in regelmäßigen Abständen mit magnetischen Nord- und Südpolen magnetisiert ist.

Diese Nord- und Südpole bilden dann die Markierungen oder Messmarken 27.2.1 des Encoderrings ER aus, die vorzugsweise konzentrisch um die Achse AS entlang einer diese Achse konzentrisch umschließenden Zylinderfläche verteilt sind. Hierbei ist jeweils einem Nord- und Südpol eine Änderung der Drehposition D des Encoderrings ER um einen vorgegebenen Winkelbetrag zugeordnet, d.h. ein Nord- und Südpol zeigt eine Änderung der Drehposition D des Encoderrings ER um einen vorgegebenen Winkelbetrag an. Die Magnetträgerschicht ist zur Ausbildung eines magnetischen Messbandes vorzugsweise auf ein Stahlband auflaminiert, welches fest mit der kreiszylinderförmigen Mantelfläche des Encoderrings ER verbunden ist. Zum Schutz gegen äußere mechanische Einflüsse kann die Magnetträgerschicht mit einer Schutzschicht überzogen sein.

Zur Erfassung der Drehposition D des Encoderrings ER wird durch die magneto-resistive Sensorelektronik 26.2.1 über wenigstens einen hierzu vorgesehenen magneto-resistiven Sensorkopf die Magnetträgerschicht berührungslos abgetastet. Hierdurch werden in der magneto-resistiven Sensorelektronik 26.2.1 zumindest das Messsignal ms, gegebenenfalls auch das Referenzmesssignal msf zur Weiterverarbeitung in der Steuer- und Auswerteinheit 28 erzeugt, und zwar zur Ermittlung der aktuellen Drehpostion D des jeweiligen Encoderrings ER und damit der an dem zugehörigen Flascheneinspannelement gehaltenen Falsche 1 und abhängig davon zur exakten Einstellung die Ausrichtung der jeweiligen Flasche 1 für die Behandlung bzw. für das Bedrucken und für die gesteuerte Drehbewegung der jeweiligen Flasche 1 während der Behandlung bzw. während des Bedruckens.

Unabhängig von der speziellen Ausbildung des Sensorsystems ist allen Ausführungen gemeinsam, dass jeder Encoderring ER an dem jeweiligen Flascheneinspannelement bzw. an der jeweiligen Halte- und Zentriereinheit 9, 9a - 9c fest vorgesehen ist und mit dieser Einheit mitbewegt wird, während die Sensoreinheiten 26, 26.1 bzw. 26.2 z.B. an den Aufnahmen 14 der Transportelemente 5, 6, 7 vorgesehen sind, und zwar zumindest dort, wo ein gesteuertes Ausrichten und/oder Drehen bzw. Schwenken der Flaschen 1 erforderlich ist.

Vorstehend wurde davon ausgegangen, dass die Sensoreinheiten 26.1 und 26.2 jeweils nur ein, die jeweilige Skalierung berührungslos abtastenden Sensor (optoelektrischer Empfänger 26.1.2 bzw. magneto-resistive Sensorelektronik 26.2.1 und die Encoderringe ER jeweils nur eine Skalierung 27, 27.1 bzw. 27.2 aufweisen. Selbstverständlich sind auch komplexere Sensorsysteme oder Sensoreinheiten denkbar, beispielsweise solche Systeme, die wenigstens zwei eine gemeinsame oder aber jeweils eine gesonderte Skalierung vorzugsweise berührungslos abtastende Sensoren aufweisen, insbesondere auch in der Form, dass diese Sensoren phasenverschobene Messsignale liefern mit denen dann durch entsprechende Verarbeitung nicht nur eine noch präzisere Bestimmung des Übergangs zwischen den einzelnen Messmarken möglich ist, sondern auch eine exakte Bestimmung der aktuellen Drehrichtung des jeweiligen Encoderrings ER bzw. des Flascheneinspannelementes und er an diesem gehaltenen Flasche.

Die Erfindung wurde voranstehend an Ausführungsbeispielen beschrieben. Es versteht sich, dass zahlreiche Änderungen sowie Abwandlungen möglich sind, ohne dass dadurch der der Erfindung zugrundeliegende Erfindungsgedanke verlassen wird. So können beispielsweise anstelle der rotor- oder transportsternartigen Transportelemente 5, 6 und/oder 7 auch andere umlaufende und in Transportrichtung auf einander folgende Transportelemente, beispielsweise solche mit umlaufenden Riemen und/oder Ketten verwendet sein.

Vorstehend wurde davon ausgegangen, dass an jedem Transportelement 5, 6 und 7 jeweils eine Behandlung der jeweiligen Flasche 1 oder ein Behandlungsschritt, d.h. ein Bedrucken der Flasche 1 erfolgt. Bei einer vereinfachten Ausführung der erfindungsgemäßen Vorrichtung wird jede Flasche 1 jeweils in dem vorausgehenden Transportelement auf das nachfolgende Transportelement vorpositioniert. Hierbei wird das Winkelsignal beispielsweise um einen geringen Winkelbetrag, beispielsweise von einem Winkelbetrag von etwa 5° vor dem nächsten Encoder gefahren. Nach der Übergabe der Flasche 1 wird diese dann erneut in Rotation gebracht, wobei durch die Abtastung des Encoderrings ER die jeweilige Istposition an die Steuer- und Auswertelektronik 28.

### Bezugszeichenliste

- 1: Flasche
- 1.1: Markierung oder Referenzmarke
- 1.2: Flaschenmündung
- 1.3: Flaschenboden
- 1.4: Mündungsflansch oder Neck-Ring
- 2, 2a - 2e: Vorrichtung zum Behandeln der Flaschen 1
- 3: Behältereinlauf
- 4: Behälterauslauf
- 5, 6, 7: Transportelement
- 8: Druckkopf
- 9, 9a - 9c: Spann- oder Halte- und Zentriereinheit
- 10: Gehäuse
- 11: Spanngabel
- 12, 12a -12d: Stellantrieb
- 13: Transportstrecke zum Rückführen der Halte- und Zentriereinheiten
- 14: Aufnahme
- 15, 16, 17: Übergabeposition
- 18: Linie
- 19: Zwischentransporteur
- 20: Rotor
- 21: Stator
- 22: Spann- und Zentrierkegel
- 23, 24, 25: Behälterträger
- 26, 26.1, 26.2: Sensorelement
- 26.1.1: Sendeeinheit
- 26.1.2: Empfangseinheit
- 26.1.3: Auswertelektronik
- 26.2.1: magneto-resistive Sensorelektronik
- 27, 27.1, 27.2: Skalierung
- 27.1.1: reflektierende Messmarke
- 27.2.1: magnetische Messmarke
- 28: Steuer- und Auswertelektronik
- A: Transportrichtung am Behältereinlauf
- B: Transportrichtung am Behälterauslauf
- AS: Achse der Spann- oder Halte- und Zentriereinheit
- D: Drehposition
- DR: Referenzposition
- ER: Encoderring
- S: Sensor zur berührungslosen Erfassung der Markierung 1.1
- os: optisches Signal
- os': reflektiertes optisches Signal
- ms: elektrisches Messsignal
- msf: Referenzsignal

## Patentansprüche

1. Vorrichtung zum Behandeln von Packmitteln (1), wie Flaschen, Dosen oder dergleichen Behältern, mit einer vorrichtungsinternen Transportstrecke (5, 6, 7), auf der die Behandlung der Packmittel (1) an Bearbeitungsstationen (8) in wenigstens einem bevorzugt in wenigstens zwei Prozessschritten erfolgt, sowie mit Halte- und Zentriereinheiten (9, 9a - 9c), mit denen die Packmittel (1) zumindest während des jeweiligen Prozessschrittes in einer für diesen Prozessschritt notwendigen Orientierung an dem vorrichtungsinternen Transportsystem angeordnet sind und/oder mit denen die Packmittel (1) zumindest während eines Prozessschrittes bewegt werden, wobei das vorrichtungsinterne Transportsystem wenigstens zwei in Transportrichtung aufeinander folgende Transportelemente (5, 6, 7) derart aufweist, und dass die Halte- und Zentriereinheiten (9, 9a - 9c) von den Transportelementen (5, 6, 7) unabhängige Einheiten sind, die zusammen mit den an ihnen gehaltenen Packmitteln (1) von einem Transportelement (5, 6) an das in Transportrichtung folgende Transportelement (6, 7) weitergeleitet werden, so dass jedes Packmittel (1) während des gesamten Prozesses an ein und derselben Halte- und Zentriereinheit (9, 9a - 9c) gehalten ist, wobei die Halte- und Zentriereinheiten (9, 9a - 9c) für eine hängende Halterung der Packmittel (1) ausgebildet sind und die Halte- und Zentriereinheiten (9a, 9c) für ein Einspannen der Packmittel (1) zwischen einem gegen eine Packmitteloberseite anliegenden Spannstück, beispielsweise in Form eines Spann- oder Zentrierkegels (22), und einem Gegenlager, beispielsweise in Form eines Packmittelträgers (23, 24, 25) ausgebildet sind.

2. Vorrichtung nach Anspruch 1, **dadurch gekennzeichnet, dass** das Spannstück durch einen Spann- oder Zentrierkegel (22) gebildet wird.

3. Vorrichtung nach Anspruch 1 oder 2, **dadurch gekennzeichnet, dass** das Gegenlager durch einen Packmittelträger gebildet wird.

4. Vorrichtung nach einem der vorhergehenden Ansprüche, **gekennzeichnet durch** einen Packmitteleinlauf (3) zum Zuführen der zu behandelnden Packmittel (1) sowie durch einen Packmittelauslauf (4) zum Abführen der behandelten Packmittel (1), wobei die Packmittel (1) am Packmitteleinlauf (3) von jeweils einem Halte- und Zentrierelement (9, 9a - 9c) aufgenommen und mit diesem an ein folgendes Transportelement (5) weitergeleitet werden und/oder am Packmittelauslauf zusammen mit der Halte- und Zentriereinheit (9, 9a - 9c) dem dortigen Transportelement (7) der vorrichtungsinternen Transportstrecke entnommen werden.

5. Vorrichtung nach einem der vorhergehenden Ansprüche, **gekennzeichnet durch** Stellantriebe (12, 12a - 12e) zum gesteuerten Ausrichten und/oder Drehen und/oder Schwenken der an den Halte- und Zentriereinheiten (9, 9a - 9c) angeordneten oder gehaltenen Packmittel (1).

6. Vorrichtung nach Anspruch 5, **dadurch gekennzeichnet, dass** jede Halte- und Zentriereinheit zumindest antriebsmäßig ständig mit einem Stellantrieb (12) oder einem Funktionselement, beispielsweise mit einem Rotor (20) des Stellantriebes (12e) verbunden ist.

7. Vorrichtung nach einem der vorhergehenden Ansprüche, **dadurch gekennzeichnet, dass** an den die vorrichtungsinternen Transportstrecke bildenden Transportelementen (5, 6, 7) oder an den dortigen Aufnahmen (14) Funktionselemente für die Stellantriebe (12e), beispielsweise Statoren (21) vorgesehen sind, die sich mit den an den Halte- und Zentriereinheiten (9) vorgesehenen Funktionselementen oder Rotoren (20) jeweils zu einem Stellantrieb (12e) ergänzen.

8. Vorrichtung nach einem der vorhergehenden Ansprüche, **dadurch gekennzeichnet, dass** die die vorrichtungsinterne Transportstrecke bildenden Transportelemente (5, 6, 7) Aufnahmen (14) aufweisen, an die die Halte- und Zentriereinheiten (9, 9a - 9c) andockbar und von denen die Halte- und Zentriereinheiten (9, 9a - 9c) abnehmbar sind.

9. Vorrichtung nach einem der vorhergehenden Ansprüche, **dadurch gekennzeichnet, dass** an den die vorrichtungsinterne Transportstrecke bildenden Transportelementen (5, 6, 7) Stellantriebe (12a - 12d) vorgesehen sind, die zumindest beim Ausrichten und/oder Behandeln der Packmittel (1) an die jeweilige Halte-und Zentriereinheit (9, 9a - 9c) ankuppelbar sind und mit den Halte- und Zentrierelementen (9, 9a - 9c) bei der Weiterleitung von einem Transportelement (5, 6) an ein nachfolgendes Transportelement (6, 7) nicht mitgeführt werden, sondern an dem jeweiligen Transportelement (5, 6, 7) verbleiben.

10. Vorrichtung nach Anspruch 9, **dadurch gekennzeichnet, dass** insbesondere dann, wenn die die vorrichtungsinterne Transportstrecke bildenden Transportelemente (5, 6, 7) unmittelbar aneinander anschließen, für die Stellantriebe (12a - 12d) wenigstens eines Transportelementes (5, 6, 7) Steuermittel vorgesehen sind, mit denen diese Stellantriebe (12a - 12d) jeweils an dem wenigstens einen Übergabebereich (15) aus der Bewegungsbahn der Stellantriebe (12a - 12c) des in Transportrichtung vorausgehenden oder nachfolgenden Transportelementes (5, 6, 7) herausbewegt werden.

11. Vorrichtung nach einem der vorhergehenden Ansprüche, **dadurch gekennzeichnet, dass** die die vorrichtungsinterne Transportstrecke bildenden Transporteure (5, 6, 7) an wenigstens einem Übergabebereich (15) unmittelbar oder über einen Zwischentransporteur (19) vorzugsweise in Form eines linearen Transportstreckenabschnitts aneinander anschließen.

12. Vorrichtung nach einem der vorhergehenden Ansprüche, **dadurch gekennzeichnet, dass** die die vorrichtungsinterne Transportstrecke bildenden Transportelemente rotor- oder transportsternartige Transportelemente (5, 6, 7) sind.

13. Vorrichtung nach einem der vorhergehenden Ansprüche, **gekennzeichnet durch** ihre Ausbildung als Druckvorrichtung zum Bedrucken der Packmittel (1), wobei die Bearbeitungsstationen Druckwerke oder Druckköpfe (8) zum Aufbringen jeweils eines Druckbildes, vorzugsweise zum Aufbringen jeweils eines Farbsatzes eines Mehrfarbendrucks sind.

14. Vorrichtung nach einem der vorhergehenden Ansprüche, **gekennzeichnet durch** eine Transportstrecke (13) zum Rückführen der Halte- und Zentriereinheiten (9, 9a - 9c) von dem Packmittelauslauf (4) an den Packmitteleinlauf (3).

15. Vorrichtung nach einem der vorhergehenden Ansprüche, **gekennzeichnet durch** Markierungen oder Referenzmarken (1.1) an den Packmitteln (1) erfassende Sensoren zur Steuerung der Stellantriebe (12, 12a - 12e) oder einer diese Stellantriebe ansteuernden Elektronik, wobei die Sensoren vorzugsweise an den Halte- und Zentriereinheiten (9, 9a - 9c) und/oder an den die vorrichtungsinterne Transportstrecke bildenden Transportelementen (5, 6, 7) und/oder an den dortigen Aufnahmen (14) und/oder an den Bearbeitungsstationen (8) vorgesehen sind.

16. Vorrichtung nach einem der vorhergehenden Ansprüche, **gekennzeichnet durch** Referenzmarken oder Markierungen an Behältereinspannelementen (11, 22, 23, 24) oder an mit diesen Einspannelementen beim Ausrichten oder Drehen der Packmittel (1) mitdrehenden Elementen sowie mit diese Markierungen oder Referenzmarken berührungslos abtastenden Sensoreinheiten (26.1, 26.2) zur Steuerung der Stellantriebe (12, 12a - 12e) oder einer diese Stellantriebe ansteuernden Elektronik, wobei die Sensoreinheiten (26, 26.1, 26.2 vorzugsweise an den Halte- und Zentriereinheiten (9, 9a - 9c) und/oder an den die vorrichtungsinterne Transportstrecke bildenden Transportelementen (5, 6, 7) und/oder an den dortigen Aufnahmen (14) und/oder an den Bearbeitungsstationen (8) vorgesehen sind.

17. Vorrichtung nach einem der vorhergehenden Ansprüche, **dadurch gekennzeichnet, dass** die Sensoren (S) und/oder die Sensoreinheiten (26, 26.1, 26.2) opto-elektrische oder magnetische Sensoren oder Sensoreinheiten (26, 26.1, 26.2) sind.

## Claims

1. Device for treating packaging means (1), such as bottles, cans, or similar containers, with a device-internal transport section (5, 6, 7), on which the treatment of the packaging means (1) is carried out on processing stations (8) in at least two processing steps, and with holding and centring elements (9, 9a - 9c), by means of which the packaging means (1) are arranged at least during the respective process step in an orientation on the device-internal transport system necessary for this process step, and/or by means of which the packaging means (1) are moved at least during one process step, wherein the device-internal transport system comprises at least two transport elements (5, 6, 7), following one another in the transport direction in this way, and that the holding and centring elements (9, 9a - 9c) are units independent of the transport elements (5, 6, 7), which are conveyed onwards, together with the packaging means (1) held by them, by a transport element (5, 6) to the transport element (6, 7) following them in the transport direction, such that each packaging means (1) is held during the entire process at one and the same holding and centring unit (9, 9a - 9c), wherein the holding and centring units (9, 9a - 9c) are configured for a suspended holding of the packaging means (1), and the holding and centring units (9a, 9c) are configured for the tensioning of the packaging means (1) between a tensioning element in contact against an upper side of the packaging means, for example in the form of a tensioning or centring cone (22), and a counter-bearing, for example in the form of a packaging means carrier (23, 24, 25).

2. Device according to claim 1, **characterised in that** the tensioning element is formed by a tensioning or centring cone (22).

3. Device according to claim 1 or 2, **characterised in that** the counter-bearing is formed by a packaging means carrier.

4. Device according to any one of the preceding claims, **characterised by** a packaging means inlet (3) for delivering the packaging means (1) to be treated, as well as a packaging means outlet (4) for discharging the treated packaging means (1), wherein the packaging means (1) are taken up at the packaging means inlet (3) in each case by a holding and centring element (9, 9a - 9c), and are forwarded by this to a following transport element (5) and/or are removed at the packaging means outlet together with the holding and centring unit (9, 9a-9c) by the transport element (7) of the device-internal transport section located there.

5. Device according to any one of the preceding claims, **characterised by** actuator drives (12, 12a-12e) for the controlled alignment and/or rotation and/or pivoting of the packaging means (1) arranged or held at the holding and centring units (9, 9a-9c).

6. Device according to claim 5, **characterised in that** each holding and centring unit is constantly connected, at least with regard to the drive, to an actuator drive (12) or a function element, for example to a rotor (20) of the actuator drive (12e).

7. Device according to any one of the preceding claims, **characterised in that** function elements for the actuator drives (12e) are provided at the transport elements (5, 6, 7), forming the device-internal transport section, or at the cut-out openings (14) located there, such as, for example, stators (21), which, with the function elements or rotors (20) provided at the holding and centring units (9), in each case provide a supplement to an actuator drive (12e).

8. Device according to any one of the preceding claims, **characterised in that** the transport elements (5, 6, 7), forming the device-internal transport section, comprise cut-out openings (14), to which the holding and centring units (9, 9a-9c) can be docked, and from which the holding and centring units (9, 9a-9c) can be removed.

9. Device according to any one of the preceding claims, **characterised in that** actuator drives (12a-12d) are provided at the transport elements (5, 6, 7) forming the device-internal transport section, which, at least during the alignment and/or treatment of the packaging means (1), can be coupled to the respective holding and centring unit (9, 9a-9c), and, at the onward conveying from one transport element (5, 6) to a following transport element (6, 7), are not also conveyed with the holding and centring unit (9, 9a-9c) but remain at the respective transport element (5, 6, 7).

10. Device according to claim 9, **characterised in that**, when the transport elements (5, 6, 7) forming the device-internal transport section are connected directly to one another, control means are provided for the actuator drives (12a-12d) of at least one transport element (5, 6, 7), with which in each case, at the at least one transition region (15), these actuator drives (12a-12d) are moved out of the movement path of the actuator drives (12a-12c) of the transport element (5, 6, 7) preceding or following in the transport direction.

11. Device according to any one of the preceding claims, **characterised in that** the transport elements (5, 6, 7), forming the device-internal transport section, at least at one transition region (15) connect to one another directly or by means of an intermediate transport element (19), preferably in the form of a linear transport section segment.

12. Device according to any one of the preceding claims, **characterised in that** the transport elements forming the device-internal transport section are rotor-like or transport star-like transport elements (5, 6, 7).

13. Device according to any one of the preceding claims, **characterised by** their configuration as printing devices for pressing the packaging means (1), wherein the processing stations are printing devices or printing heads (8) for applying in each case a printing image, preferably for the application in each case of a colour set of a multi-colour print.

14. Device according to any one of the preceding claims, **characterised by** a transport section (13) for conveying the holding and centring units (9, 9a-9c) back from the packaging means outlet (4) to the packaging means inlet (3).

15. Device according to any one of the preceding claims, **characterised by** markings or reference marks (1.1) at sensors detecting the packaging means (1), for controlling the actuator drives (12, 12a-12e) or an electronics unit controlling these actuator drives, wherein the sensors are preferably provided at the holding and centring units (9, 9a-9c) and/or at the transport elements (5, 6, 7) forming the device-internal transport section, and/or at the cut-out openings (14) located there, and/or at the treatment stations (8).

16. Device according to any one of the preceding claims, **characterised by** reference marks or markings on container tensioning elements (11, 22, 23, 24) or at elements which rotate together with these tensioning elements during the alignment or rotation of the packaging means (1), as well as with sensor units (26.1, 26.2) scanning these markings or reference marks free of contact, for the controlling of the actuator drives (12, 12a-12e), or an electronics unit actuating these actuator drives, wherein the sensor units (26, 26.1, 26.2) are preferably provided at the holding and centring units (9, 9a-9c) and/or at the transport elements (5, 6, 7) forming the device-internal transport section, and/or at the cut-out openings (14) located there, and/or at the processing stations (8).

17. Device according to any one of the preceding claims, **characterised in that** the sensors (S) and/or the sensor units (26, 26.1, 26.2) are opto-electric or magnetic sensors or sensor units (26, 26.1, 26.2).

## Revendications

1. Dispositif de traitement de matériaux d'emballage (1) tels que des bouteilles, boîtes ou récipients similaires, avec une voie de transport (5, 6, 7) interne au dispositif, sur laquelle le traitement des matériaux d'emballage (1) est effectué sur des postes de traitement (8) dans au moins une, de préférence dans au moins deux étapes de processus, ainsi qu'avec des unités de retenue et de centrage (9, 9a-9c), avec lesquelles les matériaux d'emballage (1) sont disposés au moins pendant l'étape de processus respective dans une orientation nécessaire à cette étape de processus sur le système de transport interne au dispositif et/ou avec lesquelles les matériaux d'emballage (1) sont déplacés au moins pendant une étape de processus, sachant que le système de transport interne au dispositif présente au moins deux éléments de transport (5, 6, 7) se suivant dans le sens de transport et que les unités de retenue et de centrage (9, 9a-9c) sont des unités indépendantes des éléments de transport (5, 6, 7), qui sont transmises conjointement avec les matériaux d'emballage (1) maintenus sur celles-ci d'un élément de transport (5, 6) à l'élément de transport (6, 7) suivant dans le sens de transport de sorte que chaque matériau d'emballage (1) soit maintenu pendant le processus entier sur une seule et même unité de retenue et de centrage (9, 9a-9c), sachant que les unités de retenue et de centrage (9, 9a-9c) sont réalisées pour un support suspendu des matériaux d'emballage (1) et les unités de retenue et de centrage (9a, 9c) sont réalisées pour un serrage des matériaux d'emballage (1) entre une pièce de serrage reposant contre un côté supérieur de matériau d'emballage, par exemple sous la forme d'un cône de serrage ou de centrage (22), et un palier-support, par exemple sous la forme d'un support de matériau d'emballage (23, 24, 25).

2. Dispositif selon la revendication 1, **caractérisé en ce que** la pièce de serrage est formée par un cône de serrage ou de centrage (22).

3. Dispositif selon la revendication 1 ou 2, **caractérisé en ce que** le palier-support est formé par un support de matériau d'emballage.

4. Dispositif selon l'une quelconque des revendications précédentes, **caractérisé par** une entrée de matériau d'emballage (3) pour l'amenée des matériaux d'emballage (1) à traiter ainsi que par une sortie de matériau d'emballage (4) pour l'évacuation des matériaux d'emballage traités (1), sachant que les matériaux d'emballage (1) sur l'entrée de matériau d'emballage (3) sont reçus par respectivement un élément de retenue et de centrage (9, 9a-9c) et sont transmis avec celui-ci à un élément de transport (5) suivant et/ou sont repris sur la sortie de matériau d'emballage conjointement avec l'unité de retenue et de centrage (9, 9a-9c) à l'élément de transport (7) qui s'y trouve de la voie de transport interne au dispositif.

5. Dispositif selon l'une quelconque des revendications précédentes, **caractérisé par** des mécanismes de commande (12, 12a-12e) pour l'orientation et/ou la rotation et/ou le pivotement commandés des matériaux d'emballage (1) disposés ou maintenus sur les unités de retenue et de centrage (9, 9a-9c).

6. Dispositif selon la revendication 5, **caractérisé en ce que** chaque unité de retenue et de centrage est reliée au moins en entraînement en permanence à un mécanisme de commande (12) ou un élément fonctionnel, par exemple à un rotor (20) du mécanisme de commande (12e).

7. Dispositif selon l'une quelconque des revendications précédentes, **caractérisé en ce que** des éléments fonctionnels pour les mécanismes de commande (12e), par exemple des stators (21), sont prévus sur les éléments de transport (5, 6, 7) formant les voies de transport internes au dispositif ou sur les logements (14) qui s'y trouvent, lesquels complètent les éléments fonctionnels prévus sur les unités de retenue et de centrage (9) ou rotors (20) respectivement pour former un mécanisme de commande (12e).

8. Dispositif selon l'une quelconque des revendications précédentes, **caractérisé en ce que** les éléments de transport (5, 6, 7) formant la voie de transport interne au dispositif présentent des logements (14), sur lesquels les unités de retenue et de centrage (9, 9a-9c) peuvent être arrimées et desquels les unités de retenue et de centrage (9, 9a-9c) peuvent être détachées.

9. Dispositif selon l'une quelconque des revendications précédentes, **caractérisé en ce que** sur les éléments de transport (5, 6, 7) formant la voie de transport interne au dispositif, il est prévu des mécanismes de commande (12a-12d) qui peuvent être couplés au moins lors de l'orientation et/ou du traitement des matériaux d'emballage (1) à l'unité de retenue et de centrage respective (9, 9a-9c) et ne sont pas entraînés avec les éléments de retenue et de centrage (9, 9a-9c) lors de la transmission d'un élément de transport (5, 6) à un élément de transport (6, 7) suivant mais restent sur l'élément de transport (5, 6, 7) respectif.

10. Dispositif selon la revendication 9, **caractérisé en ce qu'**en particulier si les éléments de transport (5, 6, 7) formant la voie de transport interne au dispositif sont directement contigus les uns aux autres, il est prévu des moyens de commande pour les mécanismes de commande (12a-12d) d'au moins un élément de transport (5, 6, 7), avec lesquels moyens ces mécanismes de commande (12a-12d) sont déplacés respectivement sur l'au moins une zone de remise (15) de la trajectoire des mécanismes de commande (12a-12c) de l'élément de transport (5, 6, 7) précédant ou suivant dans le sens de transport.

11. Dispositif selon l'une quelconque des revendications précédentes, **caractérisé en ce que** les transporteurs (5, 6, 7) formant la voie de transport interne au dispositif sont directement contigus ou sont contigus par le biais d'un transporteur intermédiaire (19) de préférence sous la forme d'une section de voie de transport linéaire à au moins une zone de remise (15).

12. Dispositif selon l'une quelconque des revendications précédentes, **caractérisé en ce que** les éléments de transport formant la voie de transport interne au dispositif sont des éléments de transport (5, 6, 7) de type rotor ou étoile de transport.

13. Dispositif selon l'une quelconque des revendications précédentes, **caractérisé par** sa réalisation comme dispositif d'impression pour l'impression des matériaux d'emballage (1), sachant que les postes de traitement sont des éléments d'impression ou têtes d'impression (8) pour l'application respectivement d'une image d'impression, de préférence pour l'application respectivement d'une gamme de clichés en couleurs d'une impression polychrome.

14. Dispositif selon l'une quelconque des revendications précédentes, **caractérisé par** une voie de transport (13) pour le retour des unités de retenue et de centrage (9, 9a-9c) de la sortie de matériau d'emballage (4) à l'entrée de matériau d'emballage (3).

15. Dispositif selon l'une quelconque des revendications précédentes, **caractérisé par** des capteurs détectant des marquages ou marques de référence (1.1) sur les matériaux d'emballage (1) pour la commande des mécanismes de commande (12, 12a-12e) ou d'une électronique commandant ces mécanismes de commande, sachant que les capteurs sont prévus de préférence sur les unités de retenue et de centrage (9, 9a-9c) et/ou sur les éléments de transport (5, 6, 7) formant la voie de transport interne au dispositif et/ou sur les logements qui s'y trouvent (14) et/ou sur les postes de traitement (8).

16. Dispositif selon l'une quelconque des revendications précédentes, **caractérisé par** des marques de référence ou marquages sur des éléments de serrage de récipient (11, 22, 23, 24) ou sur des éléments tournant avec ces éléments de serrage lors de l'orientation ou de la rotation des matériaux d'emballage (1) ainsi qu'avec des unités de détection (26.1, 26.2) balayant sans contact ces marquages ou marques de référence pour la commande des mécanismes de commande (12, 12a-12e) ou avec une électronique commandant ces mécanismes de commande, sachant que les unités de détection (26, 26.1, 26.2) sont prévues de préférence sur les unités de retenue et de centrage (9, 9a-9c) et/ou sur les éléments de transport (5, 6, 7) formant la voie de transport interne au dispositif et/ou sur les logements (14) qui s'y trouvent et/ou sur les postes de traitement (8).

17. Dispositif selon l'une quelconque des revendications précédentes, **caractérisé en ce que** les capteurs (S) et/ou les unités de détection (26, 26.1, 26.2) sont des capteurs ou des unités de détection (26, 26.1, 26.2) optoélectriques ou magnétiques.
